# EUROPEAN PATENT APPLICATION

(11) **EP 4 538 115 A1**
(43) Date of publication of application: **16.04.2025**
(21) Application number: 24205023.5
(22) Date of filing: 07.10.2024
(51) Int. Cl.: B60R 5/04, B60N 2/60

(54) **TONNEAU COVER STORAGE**

(30) Priority: 10.10.2023 GB 202315502
(71) Applicant: Nissan Motor Manufacturing (UK) Limited, Cranfield, Bedfordshire MK43 0DB (GB)
(72) Inventor: Payne, Robert, Cranfield, MK430DB (GB)

(57) **Abstract**

A retractable tonneau cover (100, Fig. 1) storage arrangement 30 is located below a forward edge 22 of a cushion 21 of a vehicle rear seat (20, Fig. 2). This enables storage of cover 100 with easy access, without impeding luggage room. Arrangement 30 works especially well in EVs or other vehicles which have a flat rear floor, as they lack a transmission tunnel in the footwell in front of the rear seats. Brackets 31 engage with spring biased retractable end caps (111, Fig. 3) on the tonneau cover roller (110, Fig. 3). A hook 36 is provided to engage with cover handle 102 to stabilize the cover when stored. Recess 25 may allow handle 102 to be gripped comfortably for release of the cover from the hook. The clip(s) which grip the tonneau roller ends may be omega clip(s).

## Description

### Technical Field of the Invention

The present invention relates to storage of tonneau covers within a vehicle; in particular, the invention relates to storage of retractable tonneau covers within a vehicle. Aspects of the invention relate to a tonneau cover storage arrangement; to a vehicle rear seat installation comprising a tonneau cover storage arrangement; and to a vehicle comprising a tonneau cover storage arrangement.

### Background to the Invention

In automotive applications, a tonneau cover is used to cover an otherwise open compartment or area. Tonneau covers may be for external use, such as for covering unoccupied rear seats of a convertible or open top vehicle; or the luggage bed of a pickup truck. Such covers may provide protection from weather and/or thieves; and may improve aerodynamics. Commonly, tonneau covers are also provided for internal use e.g. covering the trunk of a vehicle such as an estate car, an SUV, or a hatchback. In such circumstances, tonneau covers keep items within the trunk shielded from direct sunlight; and out of sight of potential thieves.

Internal tonneau covers commonly comprise a flexible sheet of material, typically fabric or plastic, with a first edge attached to a roller and a second, distal edge adapted to engage with one or more retaining element(s). Each end portion of the roller may be supported by a suitable bracket, such that the roller is free to rotate about its axis. The sheet can therefore be moved from a stowed position where it is wrapped around the roller to a deployed position where it extends away from the roller by pulling on the distal end of the sheet, often facilitated by the provision of a handle. To secure the cover in position, the sheet may be provided with co-operating features such as pins to releasably engage with the retaining element(s). In many instances, the roller is spring biased to provide a pulling force which acts to retract the sheet to the stowed position if the sheet is not being pulled; or is not engaged by the retaining element(s).

In the stowed position, the tonneau cover takes up relatively little space. Nevertheless, there are still occasions where retaining the cover in place can be problematic: for instance, when seeking to fit large luggage items in the trunk; either in a normal configuration, or when all or part of the rear seats are folded down. In such circumstances, the tonneau cover is typically either stored under the floor of the trunk; or on the floor of the trunk. The first location can be awkward to access, especially where there are large and/or multiple items of luggage in the trunk. The second location can interfere with the storage of luggage.

It is therefore an object of the present invention to provide a tonneau cover storage arrangement that at least partially overcomes or alleviates these problems.

### Summary of the Invention

According to a first aspect of the present invention, there is provided a tonneau cover storage arrangement for a tonneau cover of the type comprising a flexible sheet attached to a roller, the storage arrangement comprising at least two brackets provided so as to releasably engage with opposing end portions of the tonneau cover; wherein the tonneau sheet is provided with a handle at a distal edge; and the brackets and a hook are each provided below a forward edge of a seat cushion of a vehicle rear seat; the hook being adapted to engage with the handle on the tonneau sheet.

This provides a convenient location in which to store a tonneau cover, where it is readily accessed and does not impede luggage carrying capacity. This is particularly applicable in electric vehicles; or in other vehicles which lack a transmission tunnel in the footwell of the rear seats. By providing brackets to engage each end of the roller, the brackets may limit both lateral and axial movement of the tonneau cover when stowed. The tonneau cover can thereby be reliably fixed in position relative to the rear seat in both axial and lateral directions.

The at least two brackets are positioned to engage different ends of the tonneau cover. Each bracket may be mounted on a front wall of the rear seat support, each bracket being mounted at the same level below the seat cushion. In one embodiment, each bracket may be located closer to the seat cushion than to the footwell floor. In another embodiment, each bracket may be located closer to the footwell floor than to the seat cushion.

The tonneau roller may be spring biased to pull the sheet toward the stowed position.

The tonneau sheet may be formed of any suitable material. Suitable materials include fabric, plastic or the like.

The roller may be free to rotate when the end portions are fixed or held in position.

The hook may be mounted on a front wall of the rear seat support. In one embodiment, the hook may be mounted above the level of the brackets. In another embodiment, the hook may be mounted below the level of the brackets.

In one embodiment, each end portion of the roller may be moveable axially with respect to the tonneau roller; each end portion being spring biased to extend axially away from the tonneau roller. In alternative embodiments, each bracket may be movable in an axial direction with respect to the tonneau roller in the retained position; each bracket being spring biased to push inwardly on the tonneau roller.

In some embodiments, each bracket may comprise a slot having an open end and a closed end. The slot may be adapted to fit around the end portion of the roller, when retaining the tonneau cover. The closed end may abut the tip of the end portion when retaining the tonneau cover. In some embodiments, the tip and the closed end may be provided with cooperating features. The cooperating features may comprise a projecting finger and a receiving notch. The projecting finger may be retractable. In such embodiments, the projecting finger may be biassed to remain in a projecting - rather than retracted - position. In one embodiment, the projecting finger may be provided on the tip of the end portion. Alternatively, the projecting finger may be provided on the closed end of the slot.

In some embodiments, the brackets may match corresponding brackets for mounting the tonneau cover in use. The tonneau cover may be an internal tonneau cover. The tonneau cover may be used to cover the trunk of the vehicle. In such embodiments, the brackets on the rear seat support may match corresponding brackets for mounting the tonneau cover in the trunk.

In some embodiments, the bracket may comprise a clip adapted to grip around the end portion of the tonneau roller. The clip may be an omega clip. In such embodiments, the clip may be provided with an end plate adapted to abut the tip of the end portion when retaining the tonneau cover. The end plate may project substantially perpendicular to the front wall of the rear seat support. Alternatively, all or part of the end plate may slope inwardly.

The vehicle may have a flat floor in the rear seat footwell. The vehicle may be an electric vehicle.

According to a second aspect of the present invention, there is provided a vehicle rear seat installation comprising a tonneau cover storage arrangement according to the first aspect of the present invention.

The vehicle rear seat of the second aspect may include any or all features of the tonneau cover storage arrangement of the first aspect of the present invention.

According to a third aspect of the present invention, there is provided a vehicle comprising a tonneau cover storage arrangement according to the first aspect of the present invention or a vehicle rear seat installation according to the second aspect of the present invention.

The vehicle of the third aspect may include any or all features of the tonneau cover storage arrangement of the first aspect of the present invention or the vehicle rear seat installation of the second aspect of the present invention.

### Detailed Description of the Invention

In order that the invention may be more clearly understood, one or more embodiments thereof will now be described - by way of example only - with reference to the accompanying drawings, of which:
- Figure 1: is a schematic view of a rear end of a prior art vehicle with a tonneau cover for a trunk;
- Figure 2: is a schematic side view of a vehicle with a rear side door removed, illustrating a storage location for a tonneau cover according to the present invention;
- Figure 3: is a plan view of a tonneau cover installed in a vehicle trunk area;
- Figure 4: is an elevation view of a tonneau cover released from a vehicle;
- Figure 5: is a partial cutaway view of an end portion of a roller for a tonneau cover;
- Figure 6: is a side view of the tonneau cover storage arrangement of the present invention;
- Figure 7: is a front view of the tonneau cover storage arrangement, from the direction indicated by arrow VII in Figure 6; and
- Figure 8: is a view of a bracket of the tonneau cover storage arrangement, from the direction indicated by the arrow VIII in Figure 7.

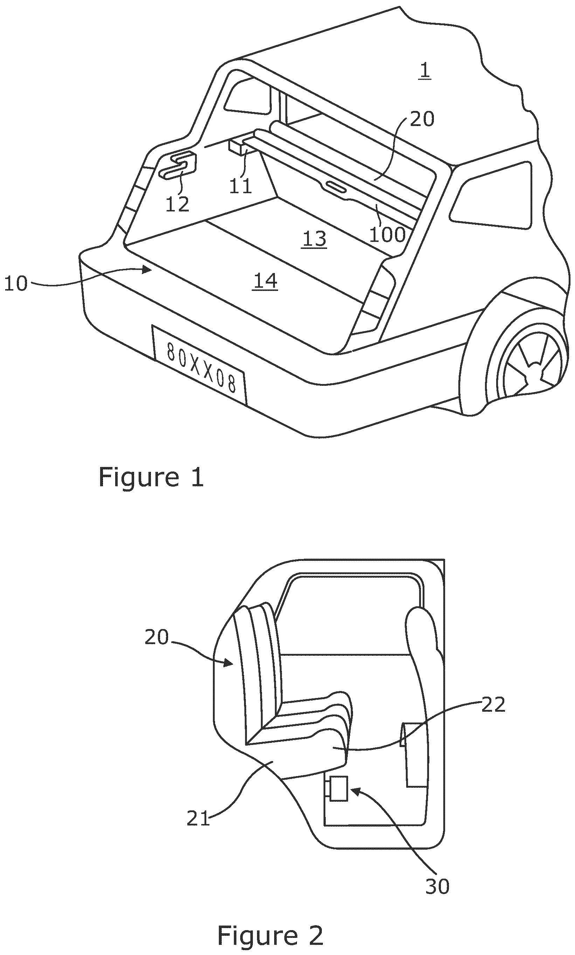

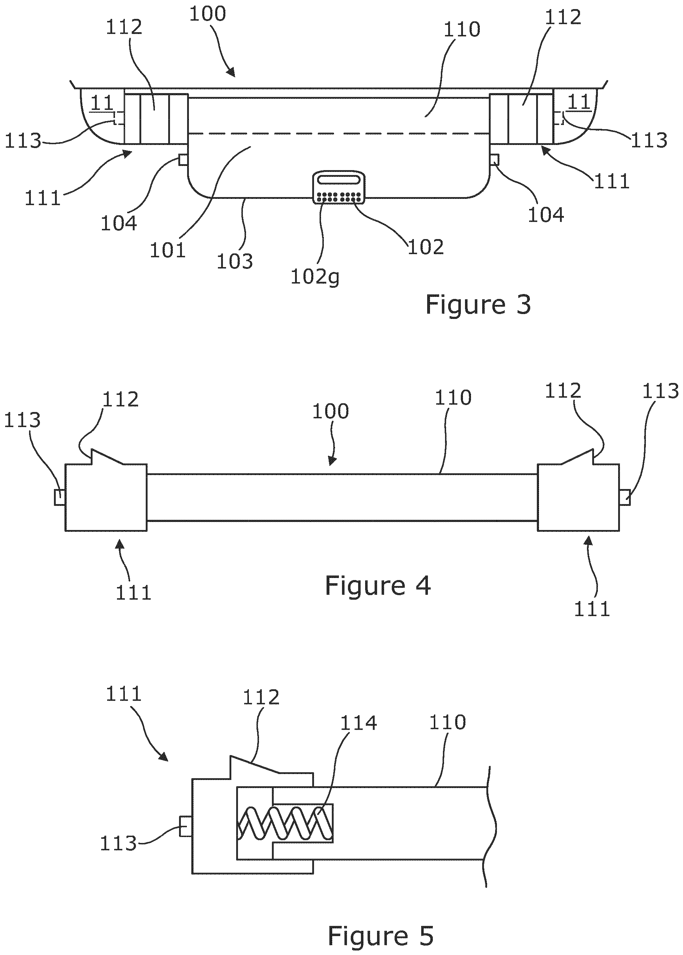

Turning now to Figure 1, a schematic view is shown of the rear of a vehicle 1 with an estate car, SUV, or hatchback layout; the rear door or tailgate being omitted for clarity. Trunk 10 is provided with a tonneau cover 100 mounted behind the rear seat 20 on brackets 11. In Figure 1, the tonneau cover is shown in a stowed position. In use, tonneau cover 100 can be extended to a deployed configuration so as to cover the trunk contents; and can then be held in position by engaging elements 12. The engaging elements 12 may be receiving hollows adapted to receive projecting pins (104, Fig. 3); or other elements provided on the tonneau cover 100.

In the event that additional trunk capacity is required, the tonneau cover 100 can be removed. Typically, the tonneau cover 100 can either be laid on the trunk floor 13; or in a compartment below the trunk floor 13 accessible via moveable panel 14. Both options can be inconvenient, as are other alternatives such as lying the tonneau cover 100 loose elsewhere in the vehicle; or leaving the tonneau cover out of the vehicle 1 altogether.

Turning to Figure 2, the present invention provides a tonneau cover storage arrangement 30 below a forward edge 22 of a seat cushion 21 of a vehicle rear seat 20. This provides a convenient location in which to store a tonneau cover 100 where it is readily accessed and does not impede luggage carrying capacity. As shown in the Figure, this works especially well in electric vehicles; or in other vehicles which lack a transmission tunnel in the footwell in front of the rear seats.

As illustrated in Figure 3, a typical tonneau cover 100 comprises a flexible sheet 101, provided with a handle 102 at one edge 103. Projecting pins 104 are provided at the sides of the sheet 101 close to the handle edge 103.

The opposing edge (not shown) of sheet 101 is attached to a roller 110. As shown in Figure 4, the roller 110 is provided with end portions 111 which can engage with corresponding brackets, for instance brackets 11 in figure 3, to allow the tonneau cover 100 to be mounted for use.

The tonneau cover 100 in Figure 3 is shown in a stowed configuration with the sheet 101 wrapped around the roller 110. In a deployed configuration, the sheet 101 can be unwrapped and stretched away from the roller 110. Typically, the roller 110 may be biased to exert a pulling force to cause the sheet 101 to wrap around the roller 110 in the absence of a counterbalancing force. Pulling on the handle 102 or engagement between the pins 104 and receiving hollows (12, Fig. 1) can hold the sheet 101 in the deployed configuration.

As is illustrated in Figure 5, in order to improve engagement with the brackets 11, the end portions 111 are slidably attached to the roller 110 and are spring biased to extend axially away from the roller 110. The skilled person will appreciate that as an alternative, each bracket 11 may be provided with a spring 114 biased to push inwardly in an axial direction with respect to the roller 110. Nevertheless, it is usually more convenient to include the bias on the tonneau cover 100, especially as this part is more readily replaced if there is a failure. End portions 111 will need to be retained on roller 110 by detents (not shown).

The spring biasing of the end portions 111 (or the brackets 11 in alternative embodiments) allows the end portions 111 to be pushed toward the roller 110 so that the tonneau cover can be readily inserted between the brackets 11. The spring bias subsequently pushes the end portions 111 into engagement with the brackets 11 so as to hold the tonneau cover 100 in position. In order to remove the tonneau cover 100 from between the brackets 11, the end portions 111 can be pushed against the spring bias to release engagement. As shown in the Figures, the end portions 111 optionally comprise gripping surfaces 112 which enable a user to apply a force against the spring bias. As shown in the Figures, the tip of the end portion 111 may comprise a projecting finger 113.

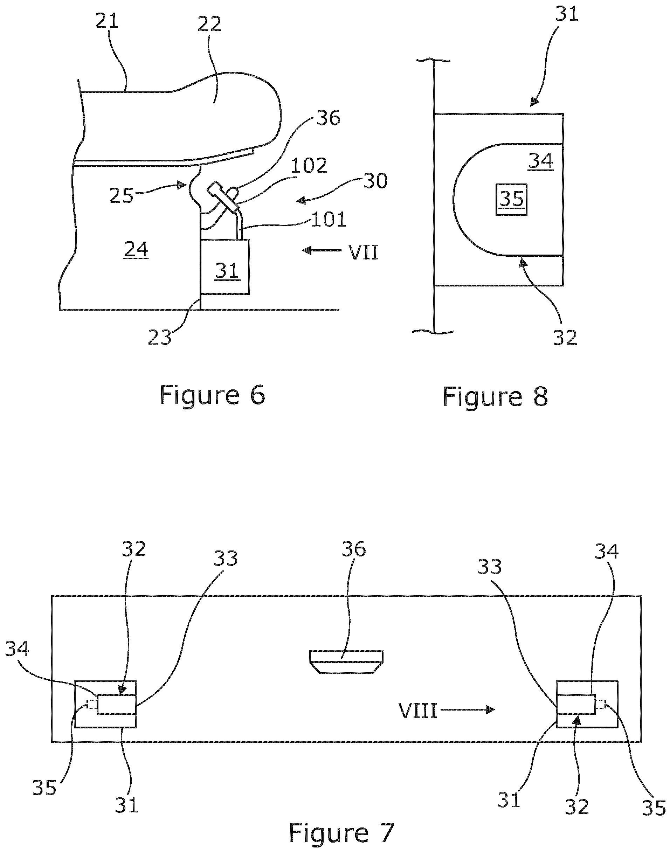

Turning to Figures 6-8, the tonneau cover storage arrangement 30 is set out in more detail. In particular, the tonneau cover storage arrangement 30 comprises a pair of brackets 31 mounted on a front wall 23 of the rear seat support 24. Optionally, the brackets 31 may have the same form as the brackets 11 in the trunk 10.

Each bracket 31 comprises a slot 32 having an open end 33 and a closed end 34. The slot 32 is adapted to fit around the end portion 111 of the tonneau cover 100. The closed end 34 is adapted to abut the end portion 111.

Similarly to the description above, the spring biasing of the end portions 111 allows the end portions 111 to be pushed toward the roller 110 so that the tonneau cover 100 can be readily inserted between the brackets 31. The spring bias subsequently pushes the end portions 111 into engagement with the brackets 31 so as to hold the tonneau cover 100 in position. In order to remove the tonneau cover 100 from between the brackets 31, the end portions 111 can be pushed against the spring bias using grips 112 to release engagement.

Optionally, as shown in Figure 7 and Figure 8, the closed end 34 of bracket 31 comprises a receiving notch 35 for the projecting finger 113. This ensures that the tonneau cover 100 is suitably aligned between the brackets 31 when stowed.

As shown in Figure 6 and Figure 7, a hook 36 is provided on the front wall 23 of the rear seat support 24. This hook is adapted to engage with handle 102 to hold it in position. This stops the handle 102 or this end of the sheet 101 from moving significantly when stowed. A rubber insulator (not shown) may be fitted to handle 102 to discourage rattling noises when the vehicle is moving. Handle 102 may feature raised bumps or nodules (102g, Fig. 3) to make it easy to grip and pull. A recess 25 may be provided in seat support 24 to allow a user's hand to comfortably grip handle 102 to release it from the hook 36.

The one or more embodiments are described above by way of example only. Many variations are possible without departing from the scope of protection afforded by the appended claims.

## Claims

1. A tonneau cover storage arrangement (30) for a tonneau cover (100) of the type comprising a flexible sheet (101) attached to a roller (110), the storage arrangement comprising at least two brackets (31) provided so as to releasably engage with opposing end portions (111) of the tonneau cover (100); wherein the tonneau sheet (101) is provided with a handle (102) at a distal edge; and the brackets (31) and a hook (36) are each provided below a forward edge (22) of a seat cushion (21) of a vehicle rear seat (20); the hook being adapted to engage with the handle (102) on the tonneau sheet (101).

2. A tonneau cover storage arrangement (30) as claimed in claim 1; wherein each bracket (31) is mounted on a front wall (23) of a rear seat support (24), and wherein each bracket (31) is mounted at the same level below the seat cushion (21).

3. A tonneau cover storage arrangement (30) as claimed in claim 1 or claim 2, wherein the tonneau roller (110) is spring biased to pull the tonneau sheet (101) toward the stowed position.

4. A tonneau cover storage arrangement (30) as claimed in any preceding claim, wherein the tonneau roller (110) is free to rotate when the end portions (111) are fixed or held in position.

5. A tonneau cover storage arrangement (30) as claimed in any preceding claim, wherein the hook (36) is mounted on a front wall (23) of a rear seat support (24), above the level of the brackets (31).

6. A tonneau cover storage arrangement (30) as claimed in any preceding claim, wherein each end portion (111) of the tonneau roller (110) is moveable axially with respect to the tonneau roller; and wherein each end portion (111) is spring biased to extend axially away from the tonneau roller (110).

7. A tonneau cover storage arrangement (30) as claimed in any one of claims 1 to 5, wherein each bracket (31) is movable in an axial direction with respect to the roller (110) in the retained position; and wherein each bracket (31) is spring biased to push inwardly on the tonneau roller (110).

8. A tonneau cover storage arrangement (30) as claimed in any preceding claim, wherein each bracket (31) comprises a slot (32) having an open end (33) and a closed end (34), the slot being adapted to fit around the end portion (111) of the tonneau cover (100) when retaining the tonneau cover.

9. A tonneau cover storage arrangement (30) as claimed in claim 8, wherein the closed end (34) abuts a tip (113) of the end portion (111) when retaining the tonneau cover (100); and wherein the tip (113) and the closed end (34) are provided with cooperating features.

10. A tonneau cover storage arrangement (30) as claimed in claim 9, wherein the cooperating features comprise a projecting finger (113) and a receiving notch (35).

11. A tonneau cover storage arrangement (30) as claimed in any preceding claim, wherein the brackets (31) match corresponding brackets (11) for mounting the tonneau cover (100) in use.

12. A tonneau cover storage arrangement (30) as claimed in any one of claims 1 to 10, wherein the bracket (31) comprises a clip adapted to grip around the end portion (111) of the tonneau roller (110).

13. A tonneau cover storage arrangement (30) as claimed in claim 12, wherein the clip is provided with an end plate adapted to abut the tip (113) of the end portion (111) when retaining the tonneau cover (100).

14. A vehicle rear seat installation comprising a tonneau cover storage arrangement (30) according to any preceding claim.

15. A vehicle (1) comprising a tonneau cover storage arrangement (30) according to any one of claims 1 to 13, or a vehicle rear seat installation according to claim 14.

16. A vehicle (1) as claimed in claim 15, wherein the vehicle has a flat floor in the rear seat footwell.
